# EUROPEAN PATENT SPECIFICATION

(11) **EP 2 458 762 B1**
(45) Date of publication and mention of the grant of the patent: **04.12.2013**
(21) Application number: 10801901.9
(22) Date of filing: 31.05.2010
(51) Int. Cl.: H04J 14/02, H04B 10/00

(54) **UNDERWATER BRANCHING UNIT OF OPTICAL ADD/DROP MULTIPLEXER, CORRESPONDING OPTICAL TRANSMISSION METHOD AND SYSTEM THEREOF**
UNTERSEE-VERZWEIGUNGSEINHEIT FÜR EINEN OPTISCHEN ADD/DROP-MULTIPLEXER, ENTSPRECHENDES OPTISCHES ÜBERTRAGUNGSVERFAHREN UND SYSTEM DAFÜR
UNITÉ DE BRANCHEMENT SOUS-MARINE DE MULTIPLEXEUR D'INSERTION/EXTRACTION OPTIQUE, PROCÉDÉ ET SYSTÈME DE TRANSMISSION OPTIQUE CORRESPONDANTS

(30) Priority: 21.07.2009 CN 200910088859
(43) Date of publication of application: 30.05.2012
(73) Proprietor: Huawei Marine Networks Co., Limited, Tianjin 300457 (CN)
(72) Inventor: WANG, Guozhong, Shenzhen Guangdong 518129 (CN); MA, Liping, Shenzhen Guangdong 518129 (CN); WEN, Ye, Longgang Shenzhen Guangdong 518129 (CN)
(74) Representative: Isarpatent
(86) International application number: PCT/CN2010/073368
(87) International publication number: WO 2011/009341

(56) References cited:
- WO-A1-97/06614
- WO-A1-98/08322
- CN-A- 1 195 436
- CN-A- 1 197 563
- CN-A- 1 250 282
- CN-A- 1 392 685
- JP-A- 7 143 070
- US-A1- 2002 057 477
- US-B1- 6 535 309
- US-B1- 7 292 786

## Description

### FIELD OF THE INVENTION

The present invention relates to optical communication technologies, and in particular, to an Optical Add-Drop Multiplexer (OADM) Branching Unit (BU) and a corresponding optical transmission method and system.

### BACKGROUND OF THE INVENTION

An OADM BU is an optical branching unit in a submarine cable system, and implements a function of adding or dropping a part of fibers or a part of wavelengths of a main submarine cable to or from a branch. When the main submarine cable needs to be cut off due to a fault or maintenance, the part of fibers or the part of wavelengths added to or dropped from the branch can still be powered normally, which minimizes impact of the fault on a submarine cable service. Therefore, introduction of an OADM BU in the submarine cable system may implement mutual communication between multiple sites, greatly reduces the number of required submarine cables, and brings a high practical value.

The OADM BU does not separate a fiber of a trunk to a branch, and the OADM BU separates only a part of an optical service channel transmitted in the fiber on the trunk to the branch and transmits the part to a branch station through a downlink fiber of the branch. Meanwhile, the OADM BU couples an optical service signal transmitted by an uplink fiber of the branch into a trunk fiber, so that the optical service signal is transmitted together with on-hand optical service channels in the trunk fiber.

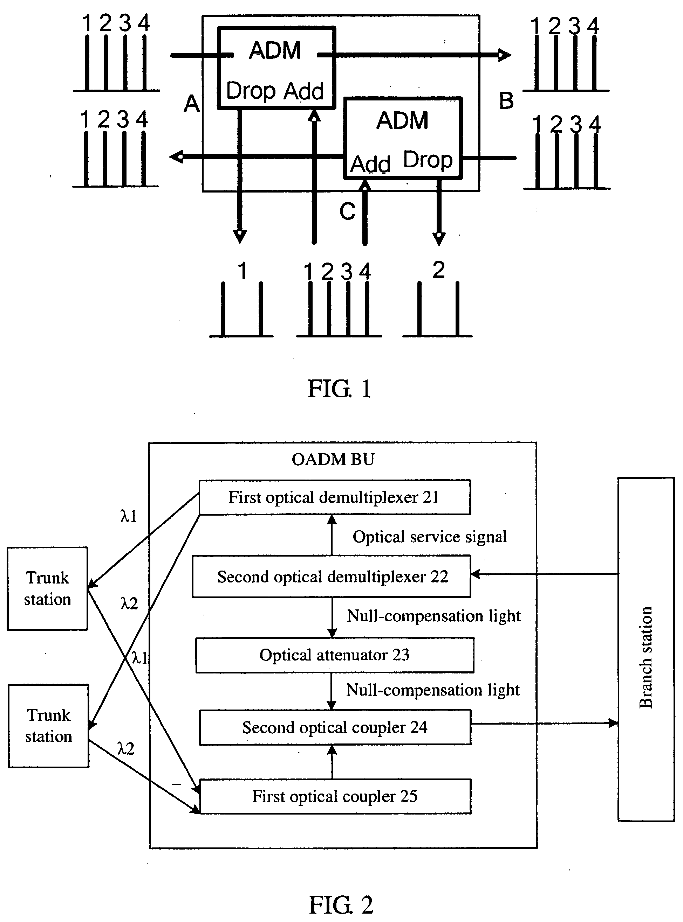

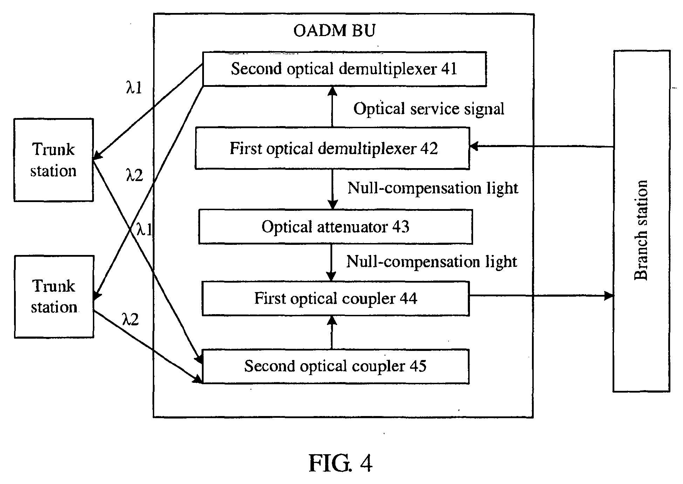

FIG. 1 is a schematic structural diagram of an OADM BU. In FIG. 1, 4 service channels from A to B enter the OADM BU; channels 1 and 3 are separated to a branch fiber, and new channels 1 and 3 transmitted on the branch are added to a trunk fiber so as to be further transmitted together with original channels 2 and 4 along the trunk fiber. A procedure of fiber transmission from B to A is similar to the foregoing.

The OADM BU is applicable to a scenario of point-to-point high-capacity service transmission, where service traffic is low on a branch node.

The prior art has at least the following problems:
In a branch submarine cable of the OADM BU, 4 fibers are required to implement a function of adding or dropping wavelengths of 2 trunk fibers.

The branch has few optical channel wavelengths, which are generally less than trunk wavelengths by 50%. An optical repeater on the branch needs to make adjustment according to the number of dropped wavelengths, which leads to complicated design of the optical repeater on the branch.

WO 97/06614 Al discloses a number of add/drop multiplexers comprising passive optical components for wavelength division multiplexing. These add/drop multiplexers are particularly adapted for use in branching units of such networks to allow signals passing along fibres of a main trunk between teiminal stations to be dropped to and added from a spur station, the design of the add/drop multiplexers allowing a reduced number of spur fibres to be used as signals are routed between trunk fibres at spur fibres according to carrier wavelength.

US 6535309 B1 discloses an optical multiplexing/demultiplexing apparatus and method. The optical multiplexing/demultiplexing apparatus has a basic constitution consisting of: an OADM circuit for branching a signal light of a specific wavelength form a wavelength-division-multiplexed signal light sent from a main optical fiber, and for inserting a signal light of a specific wavelength into the wavelength-division-multiplexed signal light sent from a main optical fiber; and an add-light power control portion for controlling the optical power of add light added in the OADM circuit based on a drop light branched in the OADM circuit.

WO98/08322 A1 discloses the use of a null-compensation light to control the optical power of optical channels in an optical transmission system with a branch unit.

### SUMMARY OF THE INVENTION

Embodiments of the present invention provide an OADM BU and a corresponding optical transmission method and system to reduce complexity and a cost of the OADM BU and reduce a requirement on complexity of an optical repeater in a branch.

An OADM BU includes:
a first optical coupler, configured to couple a part of optical signals that have different wavelengths and are respectively separated from two trunk fibers, and transmit the optical signals to a branch station through a fiber;
a first optical demultiplexer, configured to separate, according to wavelengths, optical service signals that have different wavelengths and are transmitted by the branch station through a fiber, and then transmit the optical service signals to the two trunk fibers respectively;
a second optical demultiplexer, configured to separate null-compensation light from the optical service signals transmitted by the branch station through the fiber, output null-compensation light obtained after the separation, and transmit optical service signals obtained after the separation to the first optical demultiplexer; and
a second optical coupler, configured to couple the optical signals that are output by the first optical coupler with the null-compensation light that is output by the second optical demultiplexer, and transmit the coupled optical signals to the branch station through a fiber.

An optical transmission system includes a first trunk station, a second trunk station, a branch station, and an OADM BU.

Optical signals are reciprocally transmitted between the first trunk station and the second trunk station through two trunk fibers.

The branch station is configured to transmit optical service signals of different wavelengths to the OADM BU through a fiber.

The OADM BU includes:
a first optical coupler, configured to couple a part of optical signals that have different wavelengths and are respectively separated from the two trunk fibers, and transmit the optical signals to the branch station through a fiber;
a first optical demultiplexer, configured to separate, according to wavelengths, optical signals that have different wavelengths and are transmitted by the branch station, and then transmit the optical signals to the two trunk fibers respectively;
a second optical demultiplexer, configured to separate null-compensation light from the optical service signals transmitted by the branch station through the fiber, output null-compensation light obtained after the separation, and transmit optical service signals obtained after the separation to the first optical demultiplexer; and
a second optical coupler, configured to couple the optical signals that are output by the first optical coupler with the null-compensation light that is output by the second optical demultiplexer, and transmit the coupled optical signals to the branch station through a fiber.

An OADM BU includes:
a first optical demultiplexer, configured to receive null-compensation light transmitted through a fiber by a branch station, and transmit the null-compensation light to a first optical coupler; and
a first optical coupler, configured to couple a part of optical signals separated from a trunk fiber with the null-compensation light transmitted from the first optical demultiplexer, and transmit the coupled optical signals to the branch station through a fiber.

An optical transmission method of an OADM BU includes:
separating a part of optical signals of different wavelengths from two trunk fibers respectively, coupling the part of optical signals of different wavelengths, and transmitting the optical signals to a branch station through a fiber;
separating, according to wavelengths, the optical signals that have different wavelengths and are transmitted by the branch station through a fiber, and then transmitting the optical signals to the two trunk fibers respectively;
separating null-compensation light from optical service signals transmitted through a fiber by the branch station to obtain the null-compensation light; and
coupling the null-compensation light with the part of optical signals that have different wavelengths and are respectively separated from the two trunk fibers, and transmitting the coupled optical signals to the branch station through a fiber.

As revealed in the technical solutions provided in the foregoing embodiments of the present invention, in the embodiments of the present invention, an optical coupler is used to couple a part of optical signals that have different wavelengths and are respectively separated from the two trunk fibers; an optical demultiplexer is used to separate, according to wavelengths, two optical signals that have different wavelengths and are transmitted by a branch station through a fiber; and therefore, only 2 fibers are required for implementing the function of adding or dropping channels of 2 trunk fibers, the complexity and the cost of the OADM BU are reduced, and reliability of the OADM BU is enhanced. Optical power of the optical service signals that are transmitted to the branch is controlled within a required range by controlling optical power of the null-compensation light.

### BRIEF DESCRIPTION OF THE DRAWINGS

To describe the technical solutions of the present invention more clearly, the following briefly describes the accompanying drawings involved in description of the embodiments of the present invention. Apparently, the described below show only some embodiments of the present invention, and persons of ordinary skill in the art can derive other accompanying drawings according to these accompanying drawings without any creative effort.
FIG. 1 is a schematic structural diagram of an OADM BU in the prior art;
FIG. 2 is a schematic structural diagram of an OADM BU according to a first embodiment of the present invention;
FIG. 3 is a schematic structural diagram of an OADM BU application system according to a second embodiment of the present invention; and
FIG. 4 is a schematic structural diagram of another OADM BU according to a fifth embodiment of the present invention.

### DETAILED DESCRIPTION OF THE EMBODIMENTS

In the embodiments of the present invention, the OADM BU separates a part of optical signals of different wavelengths from two trunk fibers respectively, couples the part of optical signals of different wavelengths, and transmits the coupled optical signals to a branch station through a fiber; the OADM BU separates, according to wavelengths, optical signals that have different wavelengths and are transmitted by the branch station through a fiber, and then transmits two optical signals obtained after the separation to the two trunk fibers respectively.

Null-compensation light is separated from the optical service signals transmitted by the branch station through the fiber to obtain the null-compensation light; the null-compensation light is coupled with the part of optical signals that have different wavelengths and are respectively separated from the two trunk fibers, and the coupled optical signals are transmitted to the branch station through a fiber.

Further, according to a requirement on power of optical service signals in a branch fiber, power of the null-compensation light is adjusted. The null-compensation light whose power is adjusted is coupled with the part of optical signals that have different wavelengths and are respectively separated from the two trunk fibers, and the coupled optical signals are transmitted to the branch station through the fiber.

Further, the operation of adjusting the power of the null-compensation light is implemented by the OADM BU or the branch station.

For ease of understanding of the embodiments of the present invention, the following further describes several specific embodiments with reference to the accompanying drawings. The embodiments given herein shall not be construed as limitation on the present invention.

### Embodiment 1

FIG. 2 is a schematic structural diagram of an OADM BU provided in this embodiment. The OADM BU includes the following modules:
a first optical coupler 25, configured to couple a part of optical signals that have different wavelengths and are respectively separated from two trunk fibers, and transmit the optical signals to a branch station through a fiber, where for each of the two trunk fibers, an Add-Drop Multiplexer (ADM) may be used to separate a part of optical signals of one or multiple wavelengths, but optical signals separated from different trunk fibers have different wavelengths; and
a first optical demultiplexer 21, configured to separate, according to wavelengths, multiple optical service signals that have different wavelengths and are transmitted by the branch station through a fiber, and transmit optical service signals obtained after the separation to the two trunk fibers respectively, where the first optical demultiplexer may be implemented through the ADM.

The OADM BU further includes:
a second optical demultiplexer, configured to separate null-compensation light from the optical service signals transmitted by the branch station through the fiber, output null-compensation light obtained after the separation, and transmit optical service signals obtained after the separation to the first optical demultiplexer, where the second optical demultiplexer may be implemented through the ADM; and
a second optical coupler 24, configured to couple the null-compensation light that is output by the second optical demultiplexer with the part of optical signals that have different wavelengths and are respectively separated from the two trunk fibers, and transmit the coupled optical signals to the branch station through a fiber.

The OADM BU may further include:
an optical attenuator 23, configured to receive the null-compensation light that is output by the second optical demultiplexer, adjust power of the null-compensation light according to a requirement on power of optical service signals in a branch fiber, and transmit the null-compensation light whose power is adjusted to the second optical coupler.

### Embodiment 2

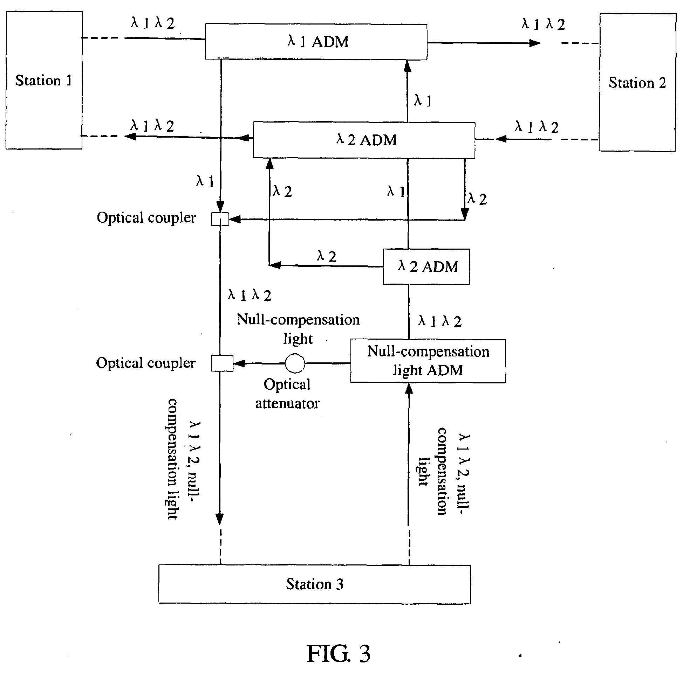

FIG. 3 is a schematic structural diagram of an OADM BU application system provided in this embodiment. The application system includes station 1, station 2, station 3, and an OADM BU. The OADM BU includes a λ1 ADM, two λ2 ADMs, a null-compensation light ADM, two optical couplers, and an optical attenuator.

A working procedure of the application system shown in FIG. 3 mainly includes the following:
In a practical application, the number of wavelengths that need to be added or dropped in the OADM BU is small and is basically less than the number of added or dropped wavelengths in a trunk by 10%. In this embodiment, the OADM BU separates different optical wavelengths of the trunk from left to right, and from right to left, respectively.

As shown in FIG. 3, in a fiber transmitted from left to right (from station 1 to station 2) of the trunk, after an optical signal enters the OADM BU, a λ1 channel is separated in the λ1 ADM; in a fiber transmitted from right to left (from station 2 to station 1) of the trunk, after an optical signal enters the OADM BU, a λ2 channel is separated in a λ2 ADM. The λ1 channel and the λ2 channel are coupled inside the OADM BU through an optical coupler, output through a branch downlink fiber to the outside of the OADM BU, and then transmitted through an optical repeater to station 3 in a branch along the fiber. In this way, one fiber is saved.

As shown in FIG. 3, a λ1 optical service signal and a λ2 optical service signal that are transmitted from the branch are output at station 3 by using a fiber, and the λ1 optical service signal and the λ2 optical service signal arrive at the other λ2 ADM inside the OADM BU. The other λ2 ADM separates the λ2 optical service signal from the received optical signal, uploads, through the foregoing λ2 ADM, the λ2 optical service signal to the trunk fiber in which transmission is performed from right to left; and uploads, through the foregoing λ1 ADM, the λ1 optical service signal to the trunk fiber that transmits a signal from left to right.

In this embodiment, only 2 fibers are required for implementing a function of adding or dropping 2 fiber channels of the trunk, which may satisfy a requirement of adding or dropping less than 50% of the wavelengths in a transmission system. The λ1 channel and the λ2 channel are used in a general sense, and may be extended to any number of channels so long as optical wavelengths of the channels are different from each other.

### Embodiment 3

In the OADM BU application system shown in FIG. 3, null-compensation light is transmitted from station 3 at the same time. The null-compensation light is light that transmits no service information. The null-compensation light occupies a certain width of spectrum, and has adjustable optical power. The null-compensation light and an optical service signal are transmitted in the same fiber, pass through a submarine optical repeater together, and are amplified. The null-compensation light and an uplink optical service signal of a branch pass through a branch uplink fiber and arrive at an OADM BU together.

In this embodiment, after the OADM BU receives the null-compensation light and the uplink optical service signal that are transmitted by station 3, the null-compensation light is separated from the branch uplink fiber through a null-compensation light ADM inside the OADM BU, and the null-compensation light ADM transmits a remaining optical service signal in the branch uplink fiber to a λ2 ADM. Afterward, power of the null-compensation light is adjusted as required through an optical attenuator, and the adjusted null-compensation light is coupled into the branch downlink fiber again through an optical coupler and is transmitted to station 3 together with the separated λ1 channel and λ2 channel through the optical repeater.

The optical repeater in the submarine cable system generally adopts a working mode with constant output optical power. Therefore, a ratio of the null-compensation light power to the total output optical power of the optical repeater is changed through the adjustment of the power of the null-compensation light. In this way, optical power of the optical service signal transmitted to the branch is controlled within a required range by adjusting power of the separated λ1 channel and λ2 channel that is output by the optical repeater.

In a practical application, the optical attenuator in the OADM BU may not be required and station 3 adjusts the optical power of the null-compensation light so as to adjust the power of the optical service signal in the uplink and downlink fibers of the branch to the required range.

In this embodiment, the optical power of the null-compensation light is controlled through the optical attenuator in the OADM BU or the station in the branch, and therefore, the optical power of the optical service signal transmitted to the branch is controlled within the required range by adjusting the power of the separated λ1 channel and λ2 channel output by the optical repeater.

### Embodiment 4

This embodiment of the present invention provides an optical transmission method of an OADM BU. A processing procedure of the method mainly includes the following:
Two trunk fibers are used to reciprocally transmit optical signals of different wavelengths between a first trunk station and a second trunk station. A part of optical signals of different wavelengths are respectively separated from the two trunk fibers, the part of optical signals of different wavelengths are coupled and transmitted to a branch station through a fiber. From each of the two trunk fibers, a part of optical signals of one or multiple wavelengths may be separated, but optical signals separated from different trunk fibers have different wavelengths.

Optical service signals that have different wavelengths and are transmitted by the branch station through a fiber are received. After being separated according to wavelengths, the optical service signals of different wavelengths are transmitted to the two trunk fibers respectively.

When the branch station additionally transmits null-compensation light to the OADM BU, the null-compensation light is separated from the optical service signals that are transmitted by the branch station through the fiber to obtain the null-compensation light and the optical service signals. Afterward, the null-compensation light is coupled with the part of optical signals that have different wavelengths and are respectively separated from the two trunk fibers, and the coupled optical signals are transmitted to the branch station through a fiber. The optical service signals obtained after the separation are separated according to wavelengths and then transmitted to the two trunk fibers respectively.

In a practical application, power of the null-compensation light needs to be adjusted according to a requirement on power of optical service signals in a branch fiber, for example, a requirement on power of an optical repeater in the branch fiber; the null-compensation light whose power is adjusted is coupled with the part of optical signals that have different wavelengths and are respectively separated from the two trunk fibers, and the coupled optical signals are transmitted to the branch station through a fiber. The operation of adjusting the power of the null-compensation light is implemented by the OADM BU or the branch station.

A first optical coupler 25 is configured to couple the part of optical signals that have different wavelengths and are respectively separated from two trunk fibers, and transmit the coupled optical signals to the branch station through a fiber. For each of the two trunk fibers, an Add-Drop Multiplexer (ADM) may be used to separate a part of optical signals of one or more wavelengths, but optical signals separated from different trunk fibers have different wavelengths.

A first optical demultiplexer 21 is configured to separate, according to wavelengths, multiple optical service signals that have different wavelengths and are transmitted by the branch station through a fiber, and transmit optical service signals obtained after the separation to the two trunk fibers respectively, where the first optical demultiplexer may be implemented through the ADM.

The OADM BU further includes:
a second optical demultiplexer, configured to separate null-compensation light from the optical service signals transmitted by the branch station through the fiber, output null-compensation light obtained after the separation, and transmit optical service signals obtained after the separation to the first optical demultiplexer, where the second optical demultiplexer may be implemented through the ADM; and
a second optical coupler 24, configured to couple the null-compensation light that is output by the second optical demultiplexer with the part of optical signals that have different wavelengths and are respectively separated from the two trunk fibers, and transmit the coupled optical channels to the branch station through a fiber.

The OADM BU may further include:
an optical attenuator 23, configured to receive the null-compensation light that is output by the second optical demultiplexer, adjust the power of the null-compensation light according to the requirement on the power of the optical service signals in the branch fiber, and transmit the null-compensation light whose power is adjusted to the second optical coupler.

### Embodiment 5

FIG. 4 is a schematic structural diagram of another OADM BU provided in this embodiment. The OADM BU includes the following modules:
a first optical demultiplexer 42, configured to receive null-compensation light transmitted through a fiber by a branch station, and transmit the null-compensation light to a first optical coupler; and
a first optical coupler 44, configured to couple a part of optical signals separated from a trunk fiber with the null-compensation light transmitted from the first optical demultiplexer, and transmit the coupled optical signals to the branch station through a fiber.

The OADM BU further includes:
a second optical coupler 45, configured to couple a part of optical signals that have different wavelengths and are respectively separated from two trunk fibers, and transmit the coupled optical channels to the first optical coupler through a fiber.

The first optical coupler 44 is further configured to: couple the null-compensation light transmitted by the first optical demultiplexer with the part of optical signals that have different wavelengths, are coupled, and are transmitted by the second optical coupler; and transmit the coupled optical signals to the branch station through a fiber.

The OADM BU further includes a second optical demultiplexer 41, and, in this case,
the first optical demultiplexer 42 is further configured to: separate the null-compensation light from optical service signals transmitted through a fiber by the branch station, transmit null-compensation light obtained after the separation to the first optical coupler, and transmit optical service signals obtained after the separation to the second optical demultiplexer.

The second optical demultiplexer 41 is configured to separate, according to wavelengths, the optical service signals transmitted by the first optical demultiplexer, and then transmit the optical service signals to the two trunk fibers respectively.

The OADM BU may further include:
an optical attenuator 43, configured to receive the null-compensation light that is output by the first optical demultiplexer, and adjust power of the null-compensation light according to a requirement on power of optical service signals in a branch fiber, and transmit the null-compensation light whose power is adjusted to the first optical coupler.

Persons of ordinary skill in the art may understand that all or part of the steps of the methods provided in the foregoing embodiments may be implemented by a program instructing relevant hardware. The program may be stored in a computer readable storage medium. When the program runs, the steps of the methods specified in the foregoing embodiments may be performed. The storage medium may be a magnetic disk, a Compact Disk Read-Only Memory (CD-ROM), a Read-Only Memory (ROM) or a Random Access Memory (RAM).

In conclusion, in the embodiments of the present invention, only 2 fibers are required for implementing the function of adding or dropping 2 fiber channels of the trunk, which may satisfy the requirement of adding or dropping less than 50% of the wavelengths in the transmission system.

In the embodiments of the present invention, the optical power of the null-compensation light is controlled through the optical attenuator in the OADM BU or the station in the branch, and therefore, the optical power of the optical service signal transmitted to the branch is controlled within the required range. In this way, the power of the optical service signals in the uplink and downlink fibers of the branch may be controlled in a simple passive mode, which reduces the number of required optical repeaters in the branch, reduces the complexity and the cost of the OADM BU, and enhances the reliability of the OADM BU. The embodiments of the present invention bring great cost-effectiveness to both the OADM BU itself and the entire transmission system equipped with the OADM BU.

The foregoing descriptions are merely specific embodiments of the present invention, but not intended to limit the protection scope of the present invention. Any modification, variation or replacement that can be easily derived by those skilled in the art shall fall within the protection scope of the present invention. Therefore, the protection scope of the present invention is subject to the appended claims.

## Claims

1. An Optical Add-Drop Multiplexer, OADM, Branching Unit, BU, comprising:
a first optical coupler (25), configured to couple a part of optical signals that have different wavelengths and are respectively separated from two trunk fibers, and transmit the optical signals to a branch station through a fiber; and
a first optical demultiplexer (21), configured to separate, according to wavelengths, optical service signals that have different wavelengths and are transmitted by the branch station through a fiber, and then transmit the optical service signals to the two trunk fibers respectively;
**characterized by**
a second optical demultiplexer (22), configured to separate null-compensation light from the optical service signals transmitted by the branch station through the fiber, output null-compensation light obtained after the separation, and transmit optical service signals obtained after the separation to the first optical demultiplexer (21); and
a second optical coupler (24), configured to couple the optical signals that are output by the first optical coupler (25) with the null-compensation light that is output by the second optical demultiplexer (22), and transmit the coupled optical signals to the branch station through a fiber.

2. The OADM BU according to claim 1, further comprising:
an optical attenuator (23), configured to receive the null-compensation light that is output by the second optical demultiplexer (22), and adjust power of the null-compensation light according to a requirement on power of optical service signals in a branch fiber, and transmit the null-compensation light whose power is adjusted to the second optical coupler (24).

3. The OADM BU according to claim 1 or claim 2, wherein:
the first optical demultiplexer (21) and the second optical demultiplexer (22) are implemented through OADMs.

4. An optical transmission system, comprising a first trunk station, a second trunk station, a branch station, and an Optical Add-Drop Multiplexer, OADM, Branching Unit, BU, wherein:
optical signals are reciprocally transmitted between the first trunk station and the second trunk station through two trunk fibers;
the branch station is configured to transmit optical service signals of different wavelengths to the OADM BU through a fiber; and
the OADM BU comprises:
a first optical coupler (25), configured to couple a part of optical signals that have different wavelengths and are respectively separated from the two trunk fibers, and transmit the optical signals to the branch station through a fiber; and
a first optical demultiplexer (21), configured to separate, according to wavelengths, optical signals that have different wavelengths and are transmitted by the branch station, and then transmit the optical signals to the two trunk fibers respectively;
the OADM BU being **characterized by**
a second optical demultiplexer (22), configured to separate null-compensation light from the optical service signals transmitted by the branch station through the fiber, output null-compensation light obtained after the separation, and transmit optical service signals obtained after the separation to the first optical demultiplexer; and
a second optical coupler (24), configured to couple the optical signals that are output by the first optical coupler (25) with the null-compensation light that is output by the second optical demultiplexer (22), and transmit the coupled optical signals to the branch station through a fiber.

5. The optical transmission system equipped with the OADM BU according to claim 4, wherein:
the branch station is further configured to adjust power of the null-compensation light according to a requirement on power of optical service signals in a branch fiber, and transmit the null-compensation light whose power is adjusted and the optical service signals of different wavelengths to the OADM BU through a fiber.

6. An optical transmission method of an Optical Add-Drop Multiplexer, OADM Branching Unit, BU, comprising:
separating a part of optical signals of different wavelengths from two trunk fibers respectively, coupling the part of optical signals of different wavelengths, and transmitting the optical signals to a branch station through a fiber; and
separating, according to wavelengths, the optical signals that have different wavelengths and are transmitted by the branch station through a fiber, and then transmitting the optical signals to the two trunk fibers respectively;
the method being **characterized by**
separating null-compensation light from optical service signals transmitted through a fiber by the branch station to obtain the null-compensation light; and
coupling the null-compensation light with the part of optical signals that have different wavelengths and are respectively separated from the two trunk fibers, and transmitting the coupled optical signals to the branch station through a fiber.

7. The optical transmission method of the OADM BU according to claim 6, further comprising:
adjusting power of the null-compensation light according to a requirement on power of optical service signals in a branch fiber, coupling the null-compensation light whose power is adjusted with the part of optical signals that have different wavelengths and are respectively separated from the two trunk fibers, and transmitting the coupled optical signals to the branch station through a fiber.

8. The optical transmission method of OADM BU according to claim 7, wherein:
the operation of adjusting the power of the null-compensation light is implemented by the OADM BU or the branch station.

## Patentansprüche

1. Verzweigungseinheit, BU, für einen optischen Add-Drop-Multiplexer, OADM (Optical Add-Drop-Multiplexer), die Folgendes umfasst:
einen ersten optischen Koppler (25), konfiguriert zum Koppeln eines Teils von optischen Signalen, die unterschiedliche Wellenlängen aufweisen und jeweils von zwei Bündelfasern getrennt sind, und Übertragen der optischen Signale an eine Zweigstation durch eine Faser; und
einen ersten optischen Demultiplexer (21), konfiguriert zum Trennen optischer Dienstsignale gemäß Wellenlängen, die unterschiedliche Wellenlängen aufweisen und durch die Zweigstation durch eine Faser übertragen werden, und dann Übertragen der optischen Dienstsignale jeweils an die beiden Bündelfasern;
**gekennzeichnet durch**
einen zweiten optischen Demultiplexer (22), konfiguriert zum Trennen von Nullkompensationslicht von den **durch** die Zweigstation **durch** die Faser übertragenen optischen Dienstsignalen, Ausgeben von nach der Trennung erhaltenem Nullkompensationslicht und Übertragen von nach der Trennung erhaltenen optischen Dienstsignalen an den ersten optischen Demultiplexer (21); und
einen zweiten optischen Koppler (24), konfiguriert zum Koppeln der optischen Signale, die **durch** den ersten optischen Koppler (25) ausgegeben werden, mit dem Nullkompensationslicht, das von dem zweiten optischen Demultiplexer (22) ausgegeben wird, und Übertragen der gekoppelten optischen Signale zu der Zweigstation **durch** eine Faser.

2. OADM BU nach Anspruch 1, die weiterhin Folgendes umfasst:
ein optisches Dämpfungsglied (23), konfiguriert zum Empfangen des Nullkompensationslichts, das von dem zweiten optischen Demultiplexer (22) ausgegeben wird, und Justieren von Leistung des Nullkompensationslichts gemäß einer Anforderung an Leistung von optischen Dienstsignalen in einer Verzweigungsfaser und Übertragen des Nullkompensationslichts, dessen Leistung auf den zweiten optischen Koppler (24) justiert ist.

3. OADM BU nach Anspruch 1 oder 2, wobei:
der erste optische Demultiplexer (21) und der zweite optische Demultiplexer (22) durch OADMs implementiert werden.

4. Optisches Übertragungssystem, umfassend eine erste Bündelstation, eine zweite Bündelstation, eine Zweigstation und eine Verzweigungseinheit, BU, für einen optischen Add-Drop-Multiplexer, OADM, wobei:
optische Signale reziprok zwischen der ersten Bündelstation und der zweiten Bündelstation durch zwei Bündelfasern übertragen werden;
die Zweigstation konfiguriert ist zum Übertragen optischer Dienstsignale unterschiedlicher Wellenlängen zu der OADM BU durch eine Faser; und
die OADM BU Folgendes umfasst:
einen ersten optischen Koppler (25), konfiguriert zum Koppeln eines Teils von optischen Signalen, die unterschiedliche Wellenlängen aufweisen und jeweils von den zwei Bündelfasern getrennt sind, und Übertragen der optischen Signale an eine Zweigstation durch eine Faser; und
einen ersten optischen Demultiplexer (21), konfiguriert zum Trennen optischer Signale gemäß Wellenlängen, die unterschiedliche Wellenlängen aufweisen und durch die Zweigstation übertragen werden, und dann Übertragen der optischen Signale jeweils an die beiden Bündelfasern;
wobei die OADM BU **gekennzeichnet ist durch**
einen zweiten optischen Demultiplexer (22), konfiguriert zum Trennen von Nullkompensationslicht von den **durch** die Zweigstation **durch** die Faser übertragenen optischen Dienstsignalen, Ausgeben von nach der Trennung erhaltenem Nullkompensationslicht und Übertragen von nach der Trennung erhaltenen optischen Dienstsignalen an den ersten optischen Demultiplexer; und
einen zweiten optischen Koppler (24), konfiguriert zum Koppeln der optischen Signale, die **durch** den ersten optischen Koppler (25) ausgegeben werden, mit dem Nullkompensationslicht, das von dem zweiten optischen Demultiplexer (22) ausgegeben wird, und Übertragen der gekoppelten optischen Signale zu der Zweigstation **durch** eine Faser.

5. Optisches Übertragungssystem, das mit der OADM BU nach Anspruch 4 ausgestattet ist, wobei:
die Zweigstation weiterhin konfiguriert ist zum Justieren von Leistung des Nullkompensationslichts gemäß einer Anforderung an Leistung von optischen Dienstsignalen in einer Zweigfaser und Übertragen des Nullkompensationslichts, dessen Leistung justiert ist, und der optischen Dienstsignale mit unterschiedlichen Wellenlängen zu der OADM BU durch eine Faser.

6. Optisches Übertragungsverfahren einer Verzweigungseinheit, BU, für einen optischen Add-Drop-Multiplexer, OADM, das Folgendes umfasst:
Trennen eines Teils von optischen Signalen mit unterschiedlichen Wellenlängen von den jeweiligen beiden Bündelfasern, Koppeln des Teils von optischen Signalen mit unterschiedlichen Wellenlängen und Übertragen der optischen Signale zu einer Zweigstation durch eine Faser; und
Trennen, gemäß Wellenlängen, der optischen Signale, die unterschiedliche Wellenlängen aufweisen und durch die Zweigstation durch eine Faser übertragen werden, und dann Übertragen der optischen Signale jeweils an die beiden Bündelfasern;
wobei das Verfahren **gekennzeichnet ist durch**:
Trennen von Nullkompensationslicht von **durch** eine Faser **durch** die Zweigstation übertragenen optischen Dienstsignalen, um das Nullkompensationslicht zu erhalten; und
Koppeln des Nullkompensationslichts mit dem Teil von optischen Signalen, die unterschiedliche Wellenlängen aufweisen und jeweils von den beiden Bündelfasern getrennt sind, und Übertragen der gekoppelten optischen Signale zu der Zweigstation durch eine Faser.

7. Optisches Übertragungsverfahren der OADM BU nach Anspruch 6, das weiterhin Folgendes umfasst:
Justieren von Leistung des Nullkompensationslichts gemäß einer Anforderung an Leistung von optischen Dienstsignalen in einer Zweigfaser, Koppeln des Nullkompensationslichts, dessen Leistung justiert ist, mit dem Teil von optischen Signalen, die unterschiedliche Wellenlängen aufweisen und jeweils von den beiden Bündelfasern getrennt sind, und Übertragen der gekoppelten optischen Signale zu der Zweigstation durch eine Faser.

8. Optisches Übertragungsverfahren einer OADM BU nach Anspruch 7, wobei:
die Operation des Justierens der Leistung des Nullkompensationslichts durch die OADM BU oder die Zweigstation implementiert wird.

## Revendications

1. Unité de Dérivation, BU (Branching Unit), à Multiplexeur d'Insertion-Extraction Optique, OADM (Optical Add-Drop Multiplexer), comprenant :
un premier coupleur optique (25), configuré pour coupler une partie de signaux optiques ayant des longueurs d'onde différentes et respectivement séparés à partir de deux fibres interurbaines, et transmettre les signaux optiques à une station de dérivation par l'intermédiaire d'une fibre ; et
un premier démultiplexeur optique (21), configuré pour séparer, en fonction de longueurs d'onde, des signaux de services optiques qui ont des longueurs d'onde différentes et sont transmis par la station de dérivation par l'intermédiaire d'une fibre, puis pour transmettre respectivement les signaux de services optiques aux deux fibres interurbaines ;
**caractérisée par**
un second démultiplexeur optique (22), configuré pour séparer une lumière de compensation à zéro des signaux de services optiques transmis par la station de dérivation par l'intermédiaire de la fibre, fournir en sortie la lumière de compensation à zéro obtenue après la séparation, et transmettre au premier démultiplexeur optique (21) les signaux de services optiques obtenus après la séparation ; et
un second coupleur optique (24), configuré pour coupler les signaux optiques qui sont fournis en sortie par le premier coupleur optique (25) à la lumière de compensation à zéro qui est fournie en sortie par le second démultiplexeur optique (22), et transmettre à la station de dérivation les signaux de services optiques couplés par l'intermédiaire d'une fibre.

2. BU OADM selon la revendication 1, comprenant en outre :
un atténuateur optique (23), configuré pour recevoir la lumière de compensation à zéro qui est fournie en sortie par le second démultiplexeur optique (22), et ajuster la puissance de la lumière de compensation à zéro conformément à une exigence imposée à la puissance de signaux de services optiques dans une fibre de dérivation, et transmettre au second coupleur optique (24) la lumière de compensation à zéro dont la puissance est ajustée.

3. BU OADM selon la revendication 1 ou la revendication 2, dans laquelle :
le premier démultiplexeur optique (21) et le second démultiplexeur optique (22) sont mis en oeuvre au moyen de multiplexeurs OADM.

4. Système de transmission optique, comprenant une première station interurbaine, une seconde station interurbaine, une station de dérivation et une Unité de Dérivation, BU, à Multiplexeur d'Insertion-Extraction Optique, OADM, dans lequel :
des signaux optiques sont transmis de manière réciproque entre la première station interurbaine et la seconde station interurbaine par l'intermédiaire de deux fibres interurbaines ;
la station de dérivation est configurée pour transmettre des signaux de services optiques de longueurs d'onde différentes à la BU OADM par l'intermédiaire d'une fibre ; et
la BU OADM comprend :
un premier coupleur optique (25), configuré pour coupler une partie de signaux optiques ayant des longueurs d'onde différentes et respectivement séparés à partir des deux fibres interurbaines, et transmettre les signaux optiques à la station de dérivation par l'intermédiaire d'une fibre ; et
un premier démultiplexeur optique (21), configuré pour séparer, en fonction de longueurs d'onde, des signaux optiques qui ont des longueurs d'onde différentes et sont transmis par la station de dérivation, puis transmettre respectivement les signaux optiques aux deux fibres interurbaines ;
la BU OADM étant **caractérisée par**
un second démultiplexeur optique (22), configuré pour séparer une lumière de compensation à zéro des signaux de services optiques transmis par la station de dérivation par l'intermédiaire de la fibre, fournir en sortie la lumière de compensation à zéro obtenue après la séparation, et transmettre au premier démultiplexeur optique les signaux de services optiques obtenus après la séparation ; et
un second coupleur optique (24), configuré pour coupler les signaux optiques qui sont fournis en sortie par le premier coupleur optique (25) à la lumière de compensation à zéro qui est fournie en sortie par le second démultiplexeur optique (22), et transmettre à la station de dérivation les signaux optiques couplés par l'intermédiaire d'une fibre.

5. Système de transmission optique équipé d'une BU OADM selon la revendication 4, dans lequel :
la station de dérivation est en outre configurée pour ajuster la puissance de la lumière de compensation à zéro en fonction d'une exigence de puissance de signaux de services optiques dans une fibre de dérivation, et pour transmettre à la BU OADM la lumière de compensation à zéro dont la puissance a été ajustée et les signaux de services optiques de longueurs différentes par l'intermédiaire d'une fibre.

6. Procédé de transmission optique d'une Unité de Dérivation, BU, à Multiplexeur d'Insertion-Extraction Optique, OADM, comprenant
la séparation d'une partie de signaux optiques de longueurs d'onde différentes à partir de deux fibres interurbaines respectives, le couplage de la partie de signaux optiques de longueurs d'onde différentes, et la transmission des signaux optiques à une station de dérivation par l'intermédiaire d'une fibre ; et
la séparation, en fonction des longueurs d'onde, des signaux optiques ayant des longueurs d'onde différentes, et transmis par la station de dérivation par l'intermédiaire d'une fibre, puis la transmission respective des signaux optiques aux deux fibres interurbaines ;
le procédé étant **caractérisé par**
la séparation d'une lumière de compensation à zéro de signaux de services optiques transmis par la station de dérivation par l'intermédiaire d'une fibre afin d'obtenir la lumière de compensation à zéro ; et
le couplage de la lumière de compensation à zéro à la partie de signaux optiques ayant des longueurs d'onde différentes et respectivement séparés à partir des deux fibres interurbaines, et la transmission à la station de dérivation des signaux optiques couplés par l'intermédiaire d'une fibre.

7. Procédé de transmission optique de la BU OADM selon la revendication 6, comprenant en outre :
l'ajustement de la puissance de la lumière de compensation à zéro conformément à une exigence imposée à la puissance de signaux de services optiques dans une fibre de dérivation, le couplage de la lumière de compensation à zéro dont la puissance a été ajustée à la partie de signaux optiques ayant des longueurs d'onde différentes et respectivement séparés des deux fibres optiques, et la transmission des signaux optiques couplés à la station de dérivation par l'intermédiaire d'une fibre.

8. Procédé de transmission optique de la BU OADM selon la revendication 7, dans lequel :
l'opération d'ajustement de la puissance de la lumière de compensation à zéro est mise en oeuvre par la BU OADM ou par la station de dérivation.
